# EUROPEAN PATENT APPLICATION

(11) **EP 4 428 826 A1**
(43) Date of publication of application: **11.09.2024**
(21) Application number: 23160304.4
(22) Date of filing: 06.03.2023
(51) Int. Cl.: G06T 17/20, G06T 15/04

(54) **METHOD AND DEVICE FOR GENERATING A 3D REPRESENTATION DERIVED FROM AN ORIGINAL 3D REPRESENTATION**

(71) Applicant: Carl Zeiss Vision International GmbH, 73430 Aalen (DE)
(72) Inventor: NÖLL, Tobias, 76344 Eggenstein-Leopoldshafen (DE); EICHERT, Armin, 73447 Oberkochen (DE)
(74) Representative: Tautz & Schuhmacher

(57) **Abstract**

Provided is a computer-implemented method being configured for generating a 3D representation (5) derived from an original 3D representation (1) of an object, the method comprising generating 2D images (3) of the original 3D representation comprising a silhouette map (31), respectively, wherein a pixel in the respective silhouette map (31) either belongs to the outer surface of the original 3D representation (1) or to a background, and generating (S2) the 3D representation (5) based on the generated silhouette maps (31).

## Description

Provided is a computer-implemented method according to claim 1, a data processing device according to claim 10, a computer program according to claim 11, a computer-readable storage medium according to claim 12, and data signal according to claim 13. Provided is a first computer system according to claim 14 and a second computer system according to claim 15.

The disclosure relates to the technical field of computer graphics and, more specifically, to mesh simplification or decimation of three-dimensional meshes. The purpose of the disclosure is to provide a method/device for generating a 3D representation derived from an original 3D representation of an object, optionally an eyeglass/spectacle frame, wherein the method reliably provides 3D representations - independently of the complexity of the original 3D representation - that are continuous detailed representations of the external appearance of the original, respectively, but are reduced in terms of a required memory size and complexity.

US 6,771,261 B2 relates to the technical field of computer graphics and, more specifically, to mesh simplification of multi-resolution models, and sets itself the object of automatically and efficiently producing simplified models. To simplify a two or three dimensional (2D or 3D) mesh and thereby produce the simplified model, US 6,771,261 B2 relies on the well-known edge contraction (also known as an edge collapse) that takes two endpoints (vertices) of a target edge within a mesh, moves them to a single position, links all incident edges to one of the vertices of the mesh at the position, deletes the other vertex, and removes any faces that have degenerated into lines or points. As a result of the edge contraction two triangular faces per edge contraction are removed, thereby simplifying the model. Edge contraction processes work by iteratively contracting edges of the mesh until a desired resolution is achieved. The core idea of US 6,771,261 B2 is to optimize the edge concentration process itself to thereby solve the problem of automatically and efficiently producing simplified models. More specifically, US 6,771,261 B2 teaches to use an error metric to determine which vertices are lesser important vertices to the shape of a mesh for purposes of mesh simplification. The metric is defined as a process for determining vertices of a mesh, that, when removed from a mesh, cause a reduced amount of damage visually to the shape of the model in comparison with removal of other vertices. The edges affected by these vertices are iteratively removed one at a time from the mesh to produce a series of models from the original, greater complexity mesh to a lesser complexity mesh. A mesh simplification system ranks all of the possible mesh simplification steps with the error metric and then performs them in order of least damaging to most damaging. Since the iterative edge contraction process generates a series of models, a user may adjust the resolution of any generated mesh, store the generated meshes and use them afterwards.

US 2015/379769 A1 belongs similarly to US 6,771,261 B2 to the technical field of computer graphics and, more specifically, to a method for mesh simplification. The object of US 2015/379769 is to provide a mesh simplification method inter alia capable of preserving repetitive structures on simplified meshes. To solve this object, US 2015/379769 relies - similar to US 6,77,1,261 B2 - on the iterative approach of edge collapsing. The basic principle of US 2015/379769 A1 includes unifying two adjacent vertices of an input mesh model into a single vertex and carrying out an edge collapse for an edge formed by two adjacent vertices in ascending order of a cost value which is determined as a function of the scales of the two adjacent vertices in the hierarchical repetitive structure of the input mesh model and geometric attributes of the two adjacent vertices.

Also, US 2021/358216 A1 belongs to the technical field of computer graphics and, more specifically, rendering complex 3D scenes on performance-limited systems (e.g., mobile systems). US 2021/358216 A1 teaches to modify a well-known lossy process called geometry simplification by distributing a geometric complexity to high priority areas in a user's view of a virtual scene. US 2021/358216 A1 thereby focuses rather on determining an appropriate simplification level for a virtual object depending on position and a screen coverage size of the virtual object than on the mesh generation itself, and simply adjusts the complexity of the mesh representing the virtual object by adjusting the number of polygons and edges of said mesh to reach out at the desired simplification level.

WO 2016/168002 A1 belongs to the technical field of computer graphics and, more specifically, to mesh decimation algorithms used to create simplified versions of 3D models with reduced polygon counts. WO 2016/169002 A1 formulates implicitly the object of providing a method for modelling an object with a reduced polygon count but in differences to other known methods by avoiding holes and gaps in unbefitting locations of the modeled object. WO 2016/169002 A1 does not only belong to the same technical field but is also directed to a similar purpose as the present disclosure. Because of that and because the teaching of WO 2016/169002 A1 requires the minimum of structural and functional modifications to arrive at the teaching of the present disclosure, it is considered to be the closest prior art. More specifically, WO 2016/168002 A1 teaches to capture two different kinds of data, i.e., depth map data and image data, from a number of previously defined perspectives of a model. The captured depth map data from different perspectives is fused to thereby generate, as an intermediate step of the mesh generation, point cloud data. In the final step of generating the mesh data, i.e., of generating a 3D representation of an original 3D object, a surface reconstruction algorithm is used to generate the mesh data based on the point cloud data. That is, WO 2016/168002 A1 teaches a computer-implemented method being configured for generating a 3D representation derived from an original 3D representation of an object, the method comprising generating depth map data of the original 3D representation and generating the 3D representation based on the generated depth map data. According to the teaching of WO 2016/168002 A1, the above-mentioned image data is not used to generate the 3D representation, but rather to propagate information into the already generated mesh/3D representation.

The present disclosure is directed to a computer-implemented method being configured for generating a 3D representation derived from an original 3D representation of an object. The method is characterized by comprising a step of generating 2D images of the original 3D representation comprising a silhouette map, respectively, wherein a pixel in the respective silhouette map either belongs to the outer surface of the original 3D representation or to a background, and a step of generating the 3D representation based on the generated silhouette maps.

The distinguishing feature, i.e., using silhouette maps instead of a depth map or in other words by-passing the computation of the depth map by using a silhouette/visual hull based approach, provides the technical effect that the generated or resulting 3D representation has substantially the same properties as a 3D representation of a physical object generated by a conventional silhouette based scanner. Therefore, the results of the present method, i.e., the generated 3D representation, may be processed together with conventionally generated 3D representation using the same or only slightly different algorithm.

The objective technical resulting from the above defined technical may be formulated as to provide a method for generating a 3D representation of an original 3D representation such that compatibility of the generated 3D representation with conventional algorithm for further processing the generated 3D representation is ensured.

This object is solved - as explained above with respect to the technical effect of the distinguishing feature- by the features of the independent claims. The dependent claims contain optional further developments of the disclosure.

More specifically and with other words, according to the disclosure defined by the independent claims silhouette maps are used to generate the 3D representation. This has the benefit that the generated 3D representation is structurally very similar to the result of a real scan employing a silhouette based scanner. Thus, the generated 3D representation and 3D representation resulting from real-world 3D scanner are structurally very similar and do not require independent treatment through later process steps.

The above referenced later process steps may include, i.e., the method may include, controlling a screen/display device based on the generated 3D representation. The method may include measuring data, such as biometrics of a user of the screen, in the real word and/or receiving a user feedback, optionally in response to the 3D representation displayed on the screen, wherein the user feedback may be received via the screen and/or a device connected to the screen. Controlling the screen may be done based on the measured values.

More specifically, controlling the screen may include displaying the generated 3D representation on the screen (e.g., for a user, e.g., on a mobile device such as a smartphone or tablet, and/or a personal computer), and/or generating and/or displaying a user interface comprising the generated 3D representation on the screen (e.g., as part of a virtual try-on in case the generated 3D representation is a spectacle frame). Additionally or alternatively, the above referenced later process steps may include, i.e., the method may include, fitting of eye glasses, e.g., centration thereof, based on the generated 3D representation.

The above reference prior art does not comprise any teaching as a whole that could or would have prompted the skilled person, faced with the objective technical problem, to modify or adapt the closest prior art while taking account of that teaching, thereby arriving at something falling within the terms of the claims, and thus achieving what the invention achieves.

More specifically, WO 2016/168002 A1 specifically teaches to rely on depth map (data) to generate the 3D representation. Using silhouette maps instead of the depth maps is thus not only not mentioned or suggested by WO 2016/168002 A1, but would also contradict the basic principle on which the teaching of WO 2016/168002 A1 relies on.

Moreover, none of the other cited documents, i.e., US 2021/358216, US 2015/379769 A1 and US 6,771,261 B2, motivates the skilled person to modify the closest prior art to reach out at something falling within the terms of the claims of the present disclosure, and thus achieving what the invention achieves. Instead, US 2021/358216, US 2015/379769 A1 and US 6,771,261 B2 all guide the skilled person to simply the mesh of the original 3D representation as such to generate the 3D representation what results in the gaps in the generated 3D representation that WO 2016/168002 A1 tries to avoid with its approach of using depth maps. In conclusion, the skilled person would not consider the teaching of US 2021/358216, US 2015/379769 A1 and US 6,771,261 B2 when being faced with above formulated problem, but even if doing so, the skilled person would not find any hint of modifying the teaching of WO 2016/168002 A1 to reach out at something falling within the terms of the claims of the present disclosure.

A computer-implemented method is one which involves the use of a computer, computer network or other programmable apparatus, where one, more or all features are realized wholly or partly by means of a computer program.

As far the disclosure refers to a 3D representation, a three-dimensional computer model of a real world object (such as a spectacle frame) is meant. The 3D representation comprises information with respect to a three-dimensional shape of the object and optionally with respect to at least one of a color and material of the object. Moreover, properties such as stiffness, surface texture, surface roughness and other mechanical properties may be included in the 3D representation.

Both or one of the 3D representations may comprise or be a mesh model comprising vertices, edges, and faces that define a 3D view of the real world object using polygons (e.g., including at least one of triangles and quadrilaterals). In other words, the outer hull of the real world object comprising a plurality of surfaces may be modelled by the original 3D representation and the 3D representation generated with the method using at least one mesh following the shape of these surfaces, i.e., having a shape that corresponds substantially to the outer hull of the real world object. This mesh may comprise or may consist of at least one of triangles and quadrilaterals. Yet in other words, in 3D computer graphics and solid modeling and thus also in this disclosure, a polygon mesh is a collection of vertices, edges and faces that defines the shape of a polyhedral object. When the term "mesh" is used herein, the term refers to a polygon mesh. However, the disclosure is not limited thereto and also a volume model may be used, at least as the original 3D representation.

As far as the disclosure refers to a 2D image, which may also be called a (digital) picture (of the original 3D representation), a two-dimensional projection of a spatial feature, i.e., of a part or the whole original 3D representation, is meant. The 2D representations contain mesh information in form of U and V coordinates of the vertexes of the mesh of the 3D representation, the 2D images do not contain any mesh information. That is, the 2D images may comprise or consist of pixels (the number of pixels and optionally their size may be predefined) wherein different information such as color are associated with each one of the pixels. The difference to the 2D representations is that in the 2D image (data) there is no information stored with respect to which pixels belongs to which spatial part of the original 3D representation or more concretely to which face of the mesh of the original 3D representation. Therefore, the complexity or in other words the granularity of the mesh of the original 3D representation becomes irrelevant for the following step of generating the 3D representation based on the 2D images. Instead, the computing power needed for generating the 3D representation depends on the number of 2D images used therefore as well as the image resolution of the respective 2D images. Moreover, this goal of decoupling the method from the complexity of the original 3D representation may be reached without any preprocessing of the original 3d representation.

Both or only one of the 3D representation and the 2D image may be a CAD file. CAD files, short for Computer-Aided Design files, may be defined as a (digital) representation of a real world object stored in a two-dimensional or three-dimensional format. 2D CAD designs are commonly known as drawings, while 3D CAD designs are called models or representations.

Generating a representation means to compute or determine the representation to be generated by inputting the respective input representation, e.g., the original 3D representation to obtain the 2D image(s) and the 2D image(s) to obtain the 3D representation to be generated, into one or more algorithm or computer-program(s) being configured to generate the representation to be generated using a predefined set of rules.

More concretely, optionally for every defined virtual camera position, a 2D image comprising a silhouette map of the original 3D representation may be generated. The silhouette map may be part of a set of 2D images that contain virtual measurement data, i.e., optionally for every defined virtual camera position a set of 2D images that contain virtual measurement data, such as at least one of the silhouette map, a color map and a normal map, may be generated. Standard rendering techniques may be used to render the original, unaltered high-resolution mesh representing the of the original 3D representation from the perspective of the current camera position in order to generate a silhouette map, and optionally at least one of the color map and the normal map, optionally for each of the 2D images. The color map may comprise color data comprising at least one of a color and a texture information of the high-resolution mesh. The normal map may comprise (normal) data comprising orientation information of the high-resolution mesh. The normal data may be encoded, i.e., for reduced storage requirements the normal (x, y, z) may be encoded in a color (r, g, b). Alternative or additional 2D maps for any feature present in the high-resolution mesh can also be generated (e.g., a 2D map containing material properties).

The above described method provides with respect to US 6,771,261 B2, US 2015/0379769 A1 and US 20217358216 A1 several advantages over the prior art. Some of these advantages include, since 2D images of the original 3D representations are generated as an intermediate step, that the step of simplifying the mesh of the original 3D representation may be obsolete and thus the above described drawbacks associated with this step may be avoided. Moreover, since these 2D images are used for generating the 3D representation, the 3D representation may be generated independently of the complexity of the original 3D representation and thus, depending on the complexity of the original 3D representation and an optional degree of simplification that should be achieved with the 3D representation, a computing power for generating the 3D representation may be reduced.

The method according to the present disclosure may additionally yield data that can give further insights how to generate a 3D representation with high quality when scanning concave objects, i.e., when the object for which a 3D representation should be created is or comprises at least one concave surface, and (or object that comprise surfaces that exhibit complex reflectance using a conventional silhouette/visual hull based scanner. Concave surfaces may often not be scanned in a sufficiently high quality with conventional silhouette/visual hull based scanner. One of the reasons therefore may be that those conventional scanners use the Lambertian reflectance model to reconstructed surfaces. A surface is said to be Lambertian if the amount of light reflected by it is proportional to the cosine of the angle between the surface normal and light source direction. This assumption may lead to inaccuracies in estimating local surface normals when the surface under inspection of the object to be scanned exhibits complex reflectance and/or is concave. The method of the present disclosure may be used for generating ground truth data for a learning based approach such that missing information from a conventional visual hull scan, e.g., due to a complex and/or concave surface, can be applied afterwards. In other words, the method may be used to generate data for a (machine) learning based approach configured for reworking 3D representations generated with a silhouette/visual hull based 3D-scanner. Thereby a quality of those 3D representations may be enhanced.

In other words, with the method a novel approach is provided that can bypass the above described drawbacks of the state of the art at least partly and that yields high qualitative results, optionally without the need for pre-processing the input data, i.e., the original 3D representation, in any way.

In the following optional further developments of the above described method are explained in detail. Every one of these further developments either individually or in combination with one, more or all other further developments at least enhances the above described advantages of the method.

Generating the 2D images of the original 3D representation may comprise determining positions located around the original 3D representation and generating a 2D image of the original 3D representation for each of the determined positions.

The 2D images that are generated may correspond to a view of the original 3D representation from the respective determined position to or towards the original 3D representation.

For some or each of the determined positions, which may also be called camera positions for a virtual camera, an individual viewing angle of the 3D representation may be defined at which the respective 2D image is generated.

A number of the positions may depend on dimensions of the original 3D representation. Additionally or alternatively, the positions may be evenly distributed around the original 3D representation. Additionally or alternatively, the positions may be located on a sphere around the original 3D representation. It is possible that a viewing angle towards a center of a sphere from the respective position is used as a default. A size or dimensions of the 2D images may be different or may be all the same. The dimensions of the 2D images may be chosen such that the whole original 3D representation, i.e., the part thereof that is visible when looking from the respective position towards the original 3D representation, may be seen in the 2D images, respectively. The center of the sphere may be located at a geometric center of the original 3D representation.

More concretely, the input mesh dimensions of the original 3D representation may be analyzed and based on that n virtual camera positions may be defined, the positions may be distributed on a sphere around the original 3D representation. The virtual cameras may be defined in a way that they have similar distances to their neighbors and are oriented towards the original 3D representation. This way, it can be assured that the object surface is "virtually scanned" uniformly from different angles.

Generating the 3D representation based on the generated 2D images may comprise generating a point cloud covering an outer surface of the original 3D representation based on the generated 2D images and generating a mesh having a predefined number of faces using a surface reconstruction method based on the generated point cloud.

In one optional implementation, using a surface reconstruction method (e.g. Screened Poisson Surface Reconstruction) an approximation mesh with the desired amount of faces may be generated, the approximation mesh corresponding to the 3D representation to be generated. This may result in a mesh representation of the objects' visual hull.

Since 2D images are used, the generated approximation mesh may be computed from scratch and is not generated by simplifying the original high-res mesh as with traditional simplification approaches. The approximation mesh is thus watertight and consists only of the outer visual hull of the high-resolution mesh, i.e., of the mesh representing the original 3D representation of the object. Thus, with the present method problematic intersecting parts and multiple mesh layers may be avoided.

These properties are substantially guaranteed because the measurement points may be generated based on silhouette maps, as described in further detail below, and thus only sample the outer visual hull. The potential problematic topology of the original mesh is withdrawn and assembled by the present surface reconstruction method in a predictable way.

In other words, the number of faces of the mesh may define the complexity of the generated 3D representation. One of the advantages of the method according to the disclosure is, that the number of faces may be set arbitrarily or depending on the use case of the generated 3D representation, i.e. independently from the complexity of the original mesh.

The point cloud may be generated based on the silhouette maps.

Generating the point cloud based on the silhouette maps may be done as described in the following. Using the silhouette maps, the virtual camera calibration (i.e., the positions and projection properties such as viewing angle and field of view) and a silhouette-based reconstruction algorithm a point cloud covering the, optionally whole, outer visual hull of the original 3D representation with measurement points may be generated.

The generated 2D images, optionally each of the generated 2D images, may comprise a feature map of the original 3D representation, respectively. Generating the 3D representation based on the generated 2D images may comprises generating an UV (conventionally the letters "U" and "V" denote the axes of the 2D texture because "X", "Y", and "Z" are used to denote the axes of the 3D representation in a model space) or texture atlas based on the generated mesh, assign to each face of the generated mesh at least one part of a feature map of the 2D images in which the respective face is visible, and propagating data from the respective feature map assigned to the respective face of the mesh into the UV atlas.

More specifically, texture maps for the generated 3D mesh of the 3D representation (that was generated from the 2D images using the silhouette maps) may be generated. Therefore, the mesh of the 3D representation may be parameterized, i.e., a UV atlas layout may be computed, to generate a suitable UV atlas for storing features (e.g. color, normals, materials, ...) present in the mesh of the original 3D representation. Then, a distinct virtual camera position may be assigned to each face of the mesh of the 3D representation. This may be called labeling and may be done in a way that the corresponding face is (well) observed in the corresponding feature map of the assigned virtual camera position. After the labeling has been performed, the generated UV atlas (in which every part corresponds to a certain face in the generated mesh) may be filled by propagating the 2D data stored in the feature maps from the feature map(s) assigned to each face of the mesh of the 3D representation into the UV atlas. This may yield, depending on the used feature maps, at least one of a color atlas, a normal atlas and another additional texture atlas, such as a material atlas.

The above-described approach does not employ any unstable raytracing techniques on potentially problematic topology as with traditional simplification approaches. No error-prone correspondences between the mesh of the original 3D representation (optionally high-resolution mesh) and the mesh of the 3D representation (optionally low resolution mesh) need to be computed. Instead, the information from the 2D feature maps may be projected in larger patches onto the mesh of the 3D representation which proves to be robust even for very drastic reduction factors of the mesh of the original 3d representation.

Generating the 3D representation based on the generated 2D representations may comprise determining at least one displacement value for a surface of the generated mesh based on normal data stored in the normal map. Generating the 3D representation based on the generated 2D representations may comprise generating a displacement atlas to be used during rendering the 3D representation based on the determined at least one displacement value. Generating the 3D representation based on the generated 2D representations may comprise generating an updated mesh of the 3D representation based on the determined at least one displacement value.

That is, the method may comprise improving a quality of the generated mesh approximation of the 3D representation. More specifically, optionally the mesh approximation may be improved using the above described normal atlas. From the normal atlas displacement values distorting a surface of the generated mesh of the 3D representation may be determined in a way that the according normal from the normal atlas are approximated. This information may then be stored in a displacement atlas which can be used during rendering or, additionally or alternatively, may be used for computing an improved mesh representation (i.e., with higher fidelity) that may replace the previously generated mesh approximation. A displacement value may be defined as a value by which the surface of the mesh is displaced outwards or inwards in a way that the displaced surface normal would align with the normal in the normal texture atlas.

The method may comprise storing the generated 3D representation in a memory in at least one predefined data format.

Additionally or alternatively, a data processing device comprising a processor configured to perform the above described method at least partly may be provided.

In other words, a data processing system comprising a processor and a storage medium coupled to the processor may be provided, wherein the processor is adapted to perform the above described method at least partly based on a computer program stored on the storage medium.

The data processing device or system may be a digital electronic machine that can be programmed to carry out sequences of arithmetic or logical operations (computation) automatically. These logical operations may be defined by the above-described method at least partly.

The data processing device may be a computer. The term computer may refer to general-purpose devices like personal computers (PC) and mobile devices like smartphones and tablets. However, the term computer is not limited to a single device. Instead, the term computer should be interpreted in a broad manner including all data processing devices configured to or being suitable to carry out the above described method, alone or in combination with other (data processing) devices, at least partly. Therefore, the term computer may also refer to a group of computers that are linked and function together, such as a computer network or computer cluster.

The data processing device may comprise at least one processor or processing element, e.g., a central processing unit (CPU) (optionally in the form of a microprocessor). The data processing device may comprise a computer memory, optionally a semiconductor memory chip. The processor may be configured to carry out a computer program. The computer program may be stored on the computer memory. The data processing device may include may be configured to be connect to one or more peripheral devices, e.g., including at least one of an input device (e.g., a keyboard, a mouse, a joystick, etc.), an output device (a monitor screen, a printer, etc.), and input/output devices that perform both functions (e.g., a touchscreen). The peripheral device may allow information to be retrieved from an external source, such as an operator of the computer, and they enable the result of operations to be saved and retrieved.

The above given description with respect to the method applies mutatis mutandis to the data processing device and vice versa.

Additionally or alternatively, a computer program comprising instructions which, when the program is executed by a computer, cause the computer to carry out the above described method at least partly may be provided.

A computer program may be defined - inter alia - as a sequence or set of instructions in a programming language for a computer to execute. The computer program may be considered a software component.

The computer program may be provided - inter alia - as an executable file and may be provided in the form of source code, i.e., its human-readable form. Source code may need an additional computer program to be executable by a computer because computers regularly can only execute their native machine instructions. Thus, also this additional computer program may be provided or may be part of the computer program. However, the computer program may also be provided without such an additional computer program.

The above given description with respect to the method and the data processing device applies mutatis mutandis to the computer program and vice versa.

Additionally or alternatively, a computer-readable storage medium having stored the above described computer program at least partly thereon may be provided.

That is, the computer-readable storage medium may comprise instructions which, when the instructions are executed by a computer, cause the computer to at least partially execute the method described above.

The computer-readable storage medium may be any digital data storage device, such as a USB flash drive, a hard drive, a CD-ROM, an SD card, or an SSD card.

The above given description with respect to the method, the data processing device and the computer program applies mutatis mutandis to the computer-readable storage medium and vice versa.

Additionally or alternatively, a data signal carrying the above described computer program at least partly thereon may be provided.

That is, the computer program does not necessarily have to be stored on a computer-readable storage medium in order to be made available to the computer, but can also be obtained externally via the data signal, e.g., using the Internet or otherwise.

The above given description with respect to the method, the data processing device, the computer program and the computer-readable storage medium applies mutatis mutandis to the data signal and vice versa.

Additionally or alternatively, a first computer system may be provided. The first computer system comprises an input interface being configured to receive an original 3D representation of an object, a processor being configured to generate a 3D representation based on the received original 3D representation of the object by generating 2D images of the original 3D representation and by generating the 3D representation based on the generated 2D images, and a storage unit for storing the generated 3D representation.

The processor of the first computer system may be configured to carry out the above described computer-implemented method at least partly.

The first computer system may provide a manufacturer of the object, e.g., a frame manufacturer, the possibility to upload detailed CAD data of the object, e.g., a frame, which are suitable for manufacturing but that are not possible to be displayed in real-time on an end user device, such as a smartphone. The first computer system may then, optionally using the above described method, convert the received CAD data into less complex CAD data suitable to be displayed in real time in the end user device. That is, the method may be used to create based on the (complex) original representation an optimized representation suitable for real-time interaction (e.g. virtual try-on).

In one specific implementation, the first computer system may be realized as a platform or cloud component. Platform users, e.g., the manufactures of spectacle frames, may connect to the platform and upload their (raw or complex) CAD data. The platform may then process the uploaded CAD data according to the above-described method and yield assets that are optimized in size and topology suitable for interactive virtual-try on of the spectacle frame, i.e., the generated 3D representation. The method has the benefit that substantially any type of frame data coming from the manufacturer may be processed and is then suitable to be used on the end customers device.

The above given description with respect to the method, the data processing device, the computer program, the computer-readable storage medium and the data signal applies mutatis mutandis to the first computer system and vice versa.

Additionally or alternatively, a second computer system may be provided. The second computer system may comprise an input/output interface. The input/output interface may be configured to send a request for a 3D representation to a first computer system, wherein the requested 3D representation was generated based on an original 3D representation of an object by generating 2D images of the original 3D representation and by generating the 3D representation based on the generated 2D images, optionally based on the above-described method. The input/output interface may be configured to receive the requested 3D representation from the first computer system. The second computer system may comprise a display unit for displaying the received 3D representation.

The received 3D representation may be at least partly generated, optionally by the first computer system, with the above described computer-implemented method.

The second-computer system may be the above referenced end user/customer device. The second-computer system may be a smartphone, a tablet and/or a personal computer. The second-computer system may be configured to run an application, e.g., a web browser application, configured to display the 3D representation generated with the above-described method. The display device may be a touch display allowing a user to interact with the displayed 3D representation. However, other input means for the interaction additionally or alternatively to the touch display may be provided. The application carried out by the second-computer system may provide the user of the second computer system a possibility to order, optionally after a virtual try-on of the displayed 3D representation, the object corresponding to the displayed 3D representation by sending an order to the first computer system and/or a further computer system, optionally operated by the manufacturer of the object. The order may be sent when the second computer system determines that the user made a predefined input to the application, e.g., pressing and/or clicking on a certain displayed button.

The above given description with respect to the method, the data processing device, the computer program, the computer-readable storage medium and the data signal, and the first computer system applies mutatis mutandis to the second computer system and vice versa.

Moreover, a computer system comprising the above described first computer system at least partly and the above described second computer system at least partly, wherein the second computer system may be connected via its input/output interface to the output interface of the first computer system.

Said computer system may comprise a third computer system which may be connected to, optionally the input interface of, the first computer system and may be configured to output the original 3D representation to the first computer system.

The above given description with respect to the method, the data processing device, the computer program, the computer-readable storage medium and the data signal, and the first computer system and the second computer system applies mutatis mutandis to the aforementioned computer system and vice versa.

A computer-implemented method being configured for operating a computer system, optionally the aforementioned computer system, may be provided, wherein the computer system comprises a first computer system, and a third computer system, wherein the third computer system is connected to the first computer system. The method may comprise sending an original 3D representation of an object from the third computer system to the second computer system, generating 2D images of the original 3D representation at the first computer system, optionally as described, and generating the 3D representation based on the generated 2D images at the first computer system, optionally as described above.

The aforementioned method may comprise storing the generated 3D representation, optionally in a memory of the first computer system.

Additional or alternatively to the aforementioned computer-implemented method, a computer-implemented method being configured for operating a computer system, optionally the aforementioned computer system, may be provided, wherein the computer system comprises a first-computer system, and a second computer system, wherein the second computer system is connected to the first computer system. The method may comprise sending a request for a 3D representation from the second computer system to the first computer system, wherein the requested 3D representation was generated, optionally by the first computer system, based on an original 3D representation of an object by generating 2D images of the original 3D representation, optionally as described above, and by generating the 3D representation based on the generated 2D images, optionally as described above, and sending the requested 3D representation from the first computer system to the second computer system.

The second computer system may comprise a display unit and the aforementioned method may comprise receiving the requested 3D representation from the first computer system at the second computer system, and displaying the received 3D representation using the display unit.

The aforementioned method may comprise receiving a user input in response to the displayed 3D representation at the second computer system, optionally via the display unit.

The aforementioned method may comprise sending an order for the object to which the displayed 3D representation corresponds in response to the received user input to the first computer system and/or to a third computer system which is part of the computer system.

For both of the aforementioned methods, a data processing device configured to carry out one or both of the methods, a computer program comprising instructions which, when the program is executed by a computer, cause the computer to carry out one or both of the methods, a computer-readable storage medium having stored the computer program thereon, and a data signal carrying the computer program may be provided.

The above given description with respect to the method, the data processing device, the computer program, the computer-readable storage medium and the data signal, and the computer systems applies mutatis mutandis to two aforementioned computer-implemented methods and vice versa.

Optional embodiments will be illustrated in the following with reference to figures 1 to 5.
- Fig. 1: shows schematically a flowchart of the computer-implemented method for generating a 3D representation derived from an original 3D representation of an object according to the disclosure,
- Fig. 2: shows schematically in a perspective view an original 3D representation of an object used in the method of figure 1,
- Fig. 3: shows schematically 2D images of the original 3D representation of the object used in the method of figure 1,
- Fig. 4: shows schematically steps of generating a point cloud out of the original 3D representation and generating a simplified mesh model out of the point cloud according to the method of figure 1,
- Fig. 5: shows schematically a computer system configured to be used with the method of figure 1, and
- Fig. 6: shows schematically a flowchart of a method for operating the computer system of figure 5.

In the drawings the same reference signs are used for corresponding or similar features in different drawings.

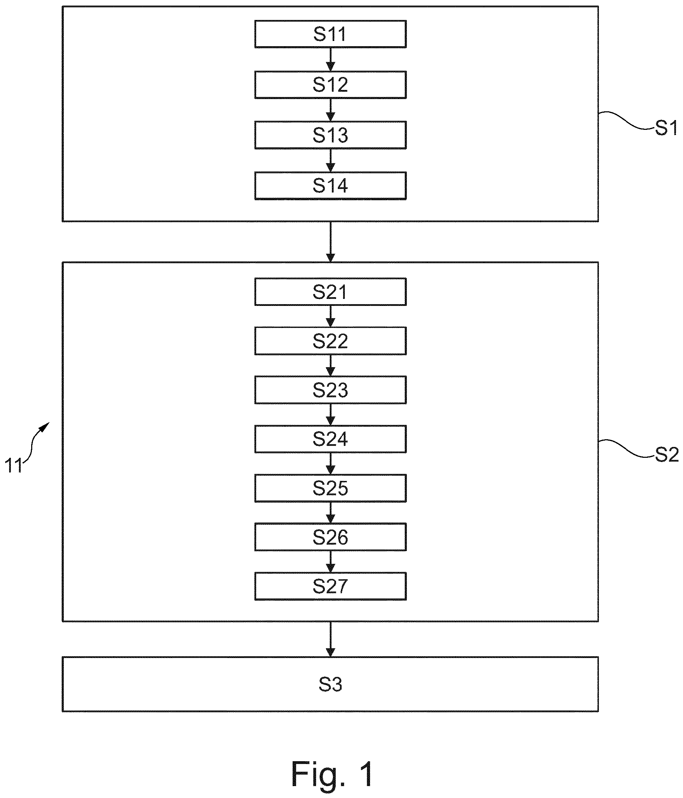

As can be gathered from figure 1, the computer-implemented method 11 for generating a 3D representation derived from an original 3D representation of an object comprises substantially three steps S1 - S3.

In a first step S1 of the method 11 2D images of the original 3D representation are generated.

In a second step S2 of the method 11, the 3D representation is generated based on the generated 2D images.

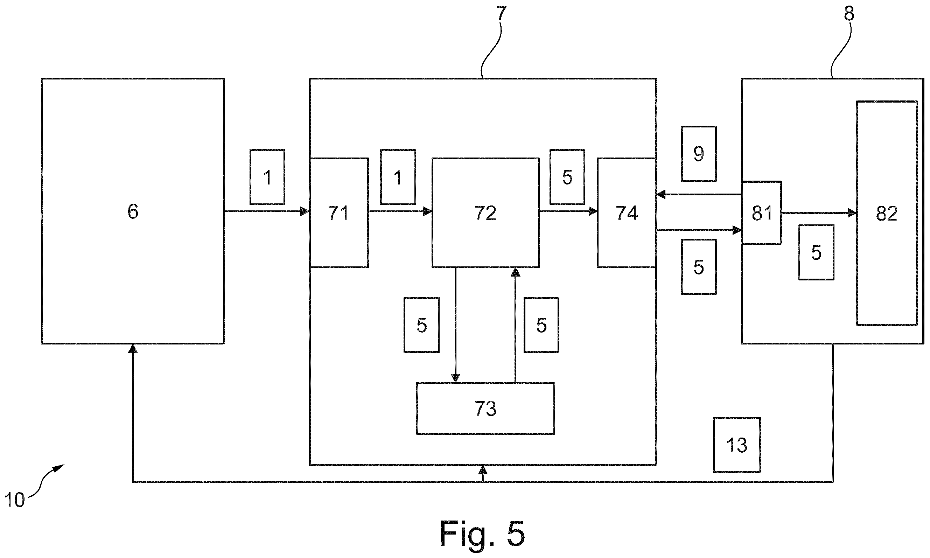

In a third step S3 of the method 11, the generated 3D representation is output in a desired data format. That is, the generated 3D (mesh) representation may be stored in different file formats for different 3D applications in a memory, such as a memory 73 shown in figure 5, and may be output in the desired format on request of the 3D application.

The first and the second step S1, S2 each comprise several sub steps which will be explained in further detail below.

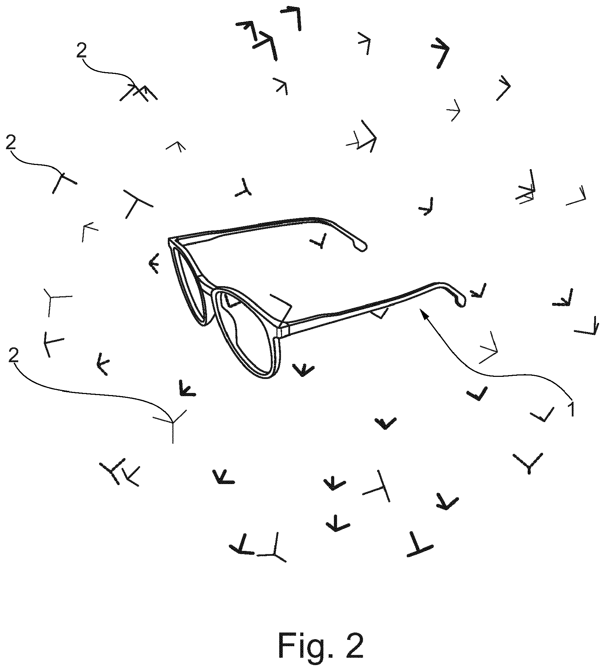

As can be gathered from figure 2, in a first sub step S11 of the first step S1 of the method 11, an original 3D representation in the form of a complex CAD mesh model 1 representing a spectacle frame is loaded.

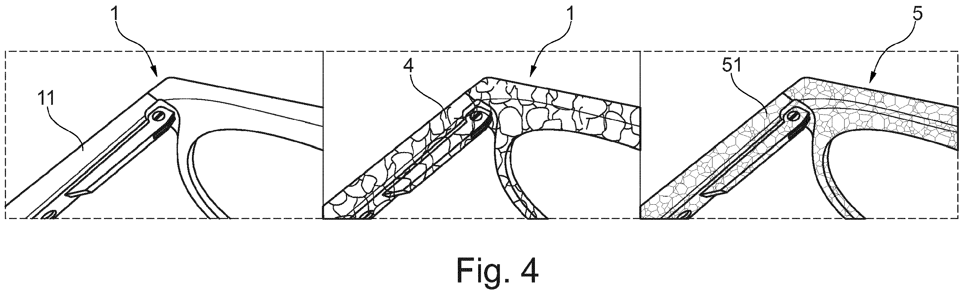

In a second sub step S12 of the first step S1 of the method 11, positions 2 located around the original or complex mesh model 1 are determined. The positions 2 are located on a sphere around the original mesh model 3 wherein the center of the sphere is located at the geometric center of the complex mesh model 1 representing the object, wherein the radius of the sphere may be determined in a way that the object is substantially fully visible in each 2D image. A number of the positions depends on dimensions or a complexity of the complex mesh model, such as for example at least one of a geometry (e.g., as defined by a number surfaces each one comprising several faces) and a number of faces 11 (see figure 4) of the complex mesh model. The higher the complexity of the complex/original mesh model, the higher the number of positions can be. The positions are evenly distributed around the complex mesh model. The number of positions may be chosen such that every face 11 of the complex mesh model 1 may be seen from at least one of the positions 2. However, since the complexity of the task rather depends on the number of virtual camera positions than the complexity of the original mesh, the number should be kept low when the goal is to keep the needed computing power low.

In a third sub step S13 of the first step S1 of the method 11, for each of the determined positions an individual viewing angle of or at the complex mesh model is defined. The viewing angles are determined or defined such that the complex mesh model is, optionally fully or as whole, located inside the viewing angles, respectively. In other words, the defined positions may be called virtual camera positions. For each one of the virtual camera positions a field of view of a virtual camera is defined. Inside each field of view the virtual camera the original 3D object represented by the complex mesh model, is located at least partly.

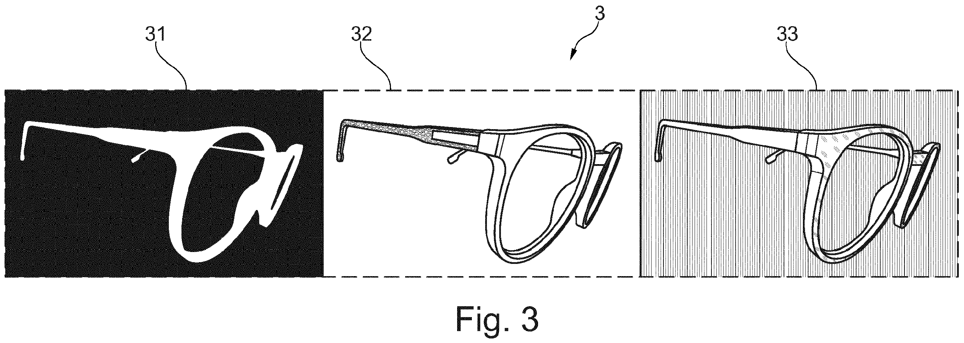

As can be gathered from figure 3, in a fourth sub step S14 of the first step S1 of the method 11, one or several 2D images 3 of the complex mesh model 1 are taken for each of the determined positions as defined in the second sub step S12 using the respective viewing angle as defined in the third sub step S13, respectively. The 2D images, which may also be called virtual measurement data, include features maps 31 - 33. In figure 2 three feature maps 31 - 33 corresponding to one of the virtual camera positions 2 and one viewing angle at the virtual camera position 2 are shown, wherein the feature maps 31 - 33 include a silhouette map 31, a color map 32 and a normal map 33 of the complex mesh 1.

In the silhouette maps 31 a pixel is defined to either belong to an outer surface, i.e., the hull, of the complex mesh model 1 (white part in figure 3) or to a background (black part in figure 3), i.e., not to the complex mesh model 1. In the color map a color of each pixel is defined based on a color and optionally a texture information of a point of the outer surface of the complex mesh model 1 corresponding to the respective pixel. In the normal map 33 an orientation of each pixel is defined based on an orientation of a face 11 of the outer surface of the complex mesh model 1 corresponding to the respective pixel.

After this fourth sub step S14, the complex mesh mode 1 may be reconstructed using the 2D images as explained in detail below with respect to the second S2 of the method in order to obtain a simplified 3D representation, i.e., a 3D representation/model with a lower number of surfaces, of the spectacle frame.

As can be gathered from figure 4, which shows on the left the complex mesh 1 of figure 1 partly, in a first sub step S21 of the second step S2 of the method 11, a point cloud 4 (see figure 4 in the middle) covering the outer surface of the complex mesh model 1 is generated based on the generated silhouette maps 31. Each point of the point cloud 4 either belongs to the outer surface of the complex mesh 1 or not.

In a second sub step S22 of the second step S2 of the method 11, a (in comparison to the original complex mesh model 1) simplified mesh (model) 5 (see right side of figure 4) of the 3D representation is generated based on the generated point cloud 4 using a surface reconstruction method, wherein the simplified mesh model 5 has a predefined amount of faces 51 that is lower than an amount of faces 11 of the original complex mesh model 1.

In a third sub step S23 of the second step S2 of the method 11, a UV atlas is generated based on the generated simplified mesh model 5.

In a fourth sub step S24 of the second step S2 of the method, to each face 51 of the simplified mesh model 5 at least one of the generated 2D images 3 is assigned in which the respective face 51 is visible, i.e., is contained. More specifically, at least one part or pixel of at least one feature map 31 - 33 of the generated 2D images 3 in which the respective face 51 of the simplified mesh model 5 is visible, is assigned to each face 51 of the simplified mesh model 5.

In a fifth sub step S25 of the second step S2 of the method 11, the data from the respective/selected part of the feature map 31 - 33 of the 2D image 3, e.g., color data from the color map 32, that is assigned to the respective face 51 of the simplified mesh model 5 is propagated into the UV atlas. In other words, the information associated with a certain part or a pixel in the feature maps 31 - 33 is stored in the UV atlas on the right sport, i.e., in connection with the face 51 of the simplified mesh model 5 the respective part of the UV atlas corresponds to. This results in an UV atlas where the condensed or fused information from several feature maps 31 - 33 of the 2D images may be stored.

In a sixth sub step S26 of the second step S2 of the method 11, displacement values for or of the outer surfaces of the generated simplified mesh model 5 are determined based on the normal data stored in the normal map 33.

In a seventh sub step S27 of the second step S2 of the method 11, the determined displacement values may be used for generating a displacement atlas to be used during rendering the simplified mesh model 5. Additionally or alternatively, the determined displacement values may be used for generating an updated mesh (model) of the 3D representation.

The above-described method 11 may be used in connection with a computer system 10 shown in figure 5.

The computer system 10 comprises a third computer system 6 that is operated by a manufacturer of the spectacle frame, a first computer system 7 being operated by a service provider and a second computer system 8, here a smartphone, of a customer of the frame manufacturer, a third computer system 6, wherein the third computer system 6 is connected to the second computer system 8 via the first computer system 7.

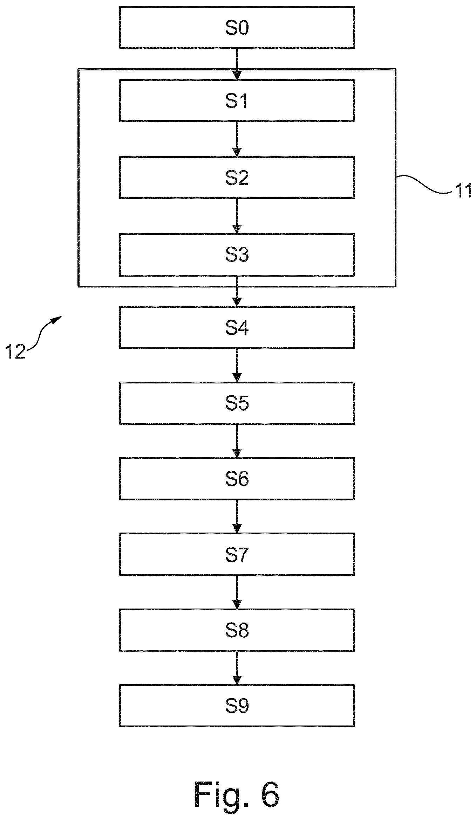

The computer system 10 is configured to carry-out a computer-implemented method 12, wherein figure 6 shows a flow chart of the computer-implemented method 12.

The computer-implemented method 12 comprises in an initial step S0 thereof sending an original 3D representation 1 of an object, here of spectacle frame, from the third computer system 6 to an input interface 71 of the first computer system 7.

The computer-implemented method 12 comprises the first, second and third step S1, S2, S3 explained above with respect to figure 1, wherein these steps are carried out by a processor 72 of the first computer system 7 and wherein the generated 3D representation is stored in a memory 73 of the first computer system 7 in the third step S3. The above given description with respect to figures 1 to 4 thus applies mutatis mutandis to the computer-implemented method 12.

The computer-implemented method 12 comprises in a fourth step S4 thereof sending a request 9 for a 3D representation 5 from an input/output interface 81 of the second computer system 8 to an input/output interface 74 of the first computer system 7.

The computer-implemented method 12 comprises in a fifth step S5 thereof loading the 3D representation generated in the first and the second step S1, S2 and stored in the third step S3 in the memory 73 of the first computer system 7 using the processor 72.

The computer-implemented method 12 comprises in a sixth step S6 thereof sending the requested 3D representation 5 from the input/output interface 74 of the first computer system 7 to the input/output interface 81 of the second computer system 8.

The computer-implemented method 12 comprises in a seventh step S7 thereof receiving the requested 3D representation 5 from the first computer system 7 at the input/output interface 81 of the second computer system 8 and displaying the received 3D representation 5 using a display unit 82 of the second computer system 8 in an eight step S8 of the computer-implemented method 12.

The computer-implemented method 12 comprises in a ninth step S9 thereof receiving a user input in response to the displayed 3D representation 5 at the second computer system 8 via the display unit 82.

The computer-implemented method 12 comprises in a tenth step S10 thereof sending an order 13 for the frame to which the displayed 3D representation 5 corresponds in response to the received user input to the first computer system 7 and/or to the third computer system 6.

For the sake of completeness, at least the above-described steps S1, S2, S3, S5 may be part of a computer program stored in the memory 73 of the first computer system 7, wherein the processor 72 of the first computer system 7 is configured to carry out the computer program.

### List of reference signs

- 1: original 3D representation/original complex mesh model
- 11: faces of the original complex mesh model
- 2: (virtual camera) positions
- 3: 2D image
- 31: silhouette map
- 32: color map
- 33: normal map
- 4: point cloud
- 5: 3D representation/simplified mesh model
- 51: faces of the simplified mesh model
- 6: third computer system
- 7: first computer system
- 71: input interface
- 72: processor
- 73: memory
- 74: input/output interface
- 8: second computer system
- 81: input/output interface
- 82: display unit or device, e.g., touch display of a smartphone or tablet
- 10: computer system
- 11: computer-implemented method
- 12: computer-implemented method
- 13: order

- S1 - S9: method steps

## Claims

1. Computer-implemented method (11) being configured for generating a 3D representation (5) derived from an original 3D representation (1) of an object, **characterized in that** the method comprises:
- generating 2D images (3) of the original 3D representation (1) comprising a silhouette map (31), respectively, wherein a pixel in the respective silhouette map (31) either belongs to the outer surface of the original 3D representation (1) or to a background, and
- generating (S2) the 3D representation (5) based on the generated silhouette maps (31).

2. Computer-implemented method (11) according to claim 1, wherein generating (S1) the 2D images (3) of the original 3D representation (1) comprises:
- determining (S12) positions (2) located around the original 3D representation (1), and
- generating (S14) a 2D image (3) of the original 3D representation (1) for each of the determined positions (2).

3. Computer-implemented (11) method according to claim 2, wherein for each of the determined positions (2) an individual viewing angle of the 3D representation (1) is defined (S13) at which the respective 2D image (3) is generated.

4. Computer-implemented method (11) according to claim 2 or 3, wherein a number of the positions (2) depends on dimensions of the original 3D representation (1).

5. Computer-implemented method (11) according to any of claims 2 to 4, wherein the positions (2) are evenly distributed around the original 3D representation (1).

6. Computer-implemented method (11) according to any of claims 1 to 5, wherein generating (S2) the 3D representation (5) based on the generated 2D images (3) comprises:
- generating (S21) a point cloud (4) covering an outer surface of the original 3D representation (1) based on the generated 2D images (3),
- generating (S22) a mesh of the 3D representation (5) having a predefined amount of faces (51) using a surface reconstruction method based on the generated point cloud (4).

7. Computer-implemented method (11) according to claim 6, wherein the point cloud (4) is generated (S21) based on the silhouette maps (31).

8. Computer-implemented method (11) according to claim 6 or 7, when being dependent on claim 2, wherein the generated 2D images (3) comprise a feature map (32) of the original 3D representation, respectively, and wherein generating (S2) the 3D representation (5) based on the generated 2D images (3) comprises:
- generating (S23) an UV atlas based on the generated mesh,
- assign (S24) to each face (51) of the mesh at least one part of a feature map (32) of the generated 2D images (3) in which the respective face (51) of the generated mesh is visible, and
- propagating (S25) data from the respective feature map (32) assigned to the respective face (51) of the mesh into the UV atlas.

9. Computer-implemented method (11) according to any of claims 6 to 8, wherein the generated 2D images (3) comprise a normal map (33) of the original 3D representation (1), respectively, and wherein generating (S2) the 3D representation (5) based on the generated 2D images (3) comprises:
- determining (S26) at least one displacement value for a surface of the generated mesh based on normal data stored in the normal map, and
- generating (S27) a displacement atlas to be used during rendering the 3D representation or generating (S27) an updated mesh of the 3D representation based on the determined at least one displacement value.

10. Data processing device (7) comprising a processor (72) configured to perform the method according to any of claims 1 to 9.

11. Computer program comprising instructions which, when the program is executed by a computer, cause the computer to carry out the method according to any of claims 1 to 9.

12. Computer-readable storage medium having stored the computer program of claim 11 thereon.

13. Data signal carrying the computer program of claim 11.

14. First computer system (7) comprising:
- an input interface (71) being configured to receive an original 3D representation (1) of an object,
- a processor (72) being configured to generate a 3D representation (5) based on the received original 3D representation (1) of the object, and
- a storage unit (73) for storing the generated 3D representation (5),
**characterized in that**
- the processor (72) is configured to generate 2D images (3) of the original 3D representation comprising a silhouette map (31), respectively, wherein a pixel in the respective silhouette map (31) either belongs to the outer surface of the original 3D representation (1) or to a background, and generate (S2) the 3D representation (5) based on the generated silhouette maps (31).

15. Second computer system (8) comprising:
- an input/output interface (81) being configured to:
- send a request (9) for a 3D representation (5) to a first computer system (7), and
- receive the requested 3D representation (5) from the first computer system (7), and
- a display unit (82) for displaying the received 3D representation (5),
**characterized in that** the requested 3D representation (5) was generated by:
- generating 2D images (3) of the original 3D representation comprising a silhouette map (31), respectively, wherein a pixel in the respective silhouette map (31) either belongs to the outer surface of the original 3D representation (1) or to a background, and
- generating (S2) the 3D representation (5) based on the generated silhouette maps (31).
